# EUROPEAN PATENT APPLICATION

(11) **EP 3 858 899 A1**
(43) Date of publication of application: **04.08.2021**
(21) Application number: 19867903.7
(22) Date of filing: 17.09.2019
(51) Int. Cl.: C08J 5/24, C08G 59/50

(54) **RESIN COMPOSITION FOR FIBER-REINFORCED COMPOSITE MATERIAL, AND FIBER-REINFORCED COMPOSITE MATERIAL USING SAME**

(30) Priority: 25.09.2018 JP 2018178480
(71) Applicant: NIPPON STEEL Chemical & Material Co., Ltd., Tokyo 1030027 (JP)
(72) Inventor: KANO Kyohei, Tokyo 103-0027 (JP)
(74) Representative: Beckmann, Claus
(86) International application number: PCT/JP2019/036357
(87) International publication number: WO 2020/066746

(57) **Abstract**

To provide a resin composition that is suitable for use as a matrix resin for a fiber-reinforced composite material, the resin composition exhibiting excellent impregnation properties into reinforcing fibers and rapid curing properties, giving a molded product having high heat resistance when cured, and exhibiting excellent productivity in a short time. A two-pack curable resin composition for a fiber-reinforced composite material, including a main agent that includes an epoxy resin (A) and an ester compound (B) represented by general formula (1) below, and a curing agent that includes an amine compound (C) : 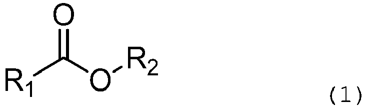 (R₁ and R₂ each denote an alkyl group or an aryl group, and R₁ and R₂ may bond together to form a cyclic structure; or R₁ may be an ester-containing group).

## Description

### [Technical Field]

The present invention relates to: a resin composition for a fiber-reinforced composite material, which has a low viscosity and exhibits excellent curability in a short time; a fiber-reinforced composite material obtained using the resin composition; and a method for producing a fiber-reinforced molded body using the fiber-reinforced composite material.

### [Background Art]

Fiber-reinforced composite materials are generally constituted from reinforcing fibers, such as glass fibers, aramid fibers or carbon fibers, and a thermosetting matrix resin, such as an unsaturated polyester resin, a vinyl ester resin, an epoxy resin, a phenol resin, a benzoxazine resin, a cyanate resin or a bismaleimide resin, are lightweight, and are excellent in terms of strength and mechanical properties such as corrosion resistance and fatigue resistance, and are therefore widely used as structural materials for aircraft, motor vehicles, civil engineering, sports equipment, and the like.

Methods for producing fiber-reinforced composite materials are carried out using methods such as autoclave molding methods and press molding methods using prepregs in which a thermosetting matrix resin is impregnated in reinforcing fibers in advance; resin transfer molding methods that include a step for impregnating reinforcing fibers with a liquid matrix resin and a molding step involving thermal curing; liquid compression molding methods; wet layup molding methods; pultrusion methods; and filament winding molding methods. Of these, in molding methods such as resin transfer molding methods, in which impregnation and molding are carried out without using a prepreg, a low viscosity matrix resin is used in order to rapidly impregnate reinforcing fibers.

In addition, in resin transfer molding methods and liquid compression molding methods, a matrix resin having a rapid curing speed is required after reinforcing fibers are impregnated with the resin in order to ensure high productivity. Furthermore, these molding methods include a step for demolding a molded product from a mold following curing, and a matrix resin composition having excellent demolding properties in addition to a rapid curing speed is required in order to ensure high productivity.

In the past, thermosetting resins such as unsaturated polyester resins, vinyl ester resins, urethane resins and epoxy resins came to be used in resin transfer molding methods and liquid compression molding methods. Radical-polymerizable unsaturated polyester resins and vinyl ester resins exhibit low viscosity and excellent rapid curing properties, but have problems such as significant curing shrinkage at the time of molding and giving molded products having relatively low heat resistance and mechanical properties such as strength and toughness. Urethane resins exhibit excellent rapid curing properties and give cured products having high strength and toughness, but have problems such as molded products having low heat resistance and high water absorption rate. Epoxy resins give molded products having high heat resistance, strength and toughness, but have problems such as poor rapid curing properties.

PTL 1 indicates that efforts have been made to impart a resin composition with rapid curing properties by combining an epoxy resin with a specific phenol compound, but the time until gelling occurs is long, rapid curing properties are insufficient, and heat resistance is also poor.

PTL 2 and 3 indicate that efforts have been made to impart rapid curing properties by adding a specific catalyst to a resin composition comprising an epoxy resin and a polyethylene polyamine. However, the time until gelling occurs is long, and rapid curing properties are insufficient.

PTL 4 indicates that efforts have been made to impart a resin composition with rapid curing properties by combining an epoxy resin, a specific amine compound and a specific phenol resin, but rapid curing properties are as yet insufficient.

PTL 5, 6, 7 and 8 have proposed epoxy resin compositions in which lactone compounds are used, but these are not two-pack curable epoxy resin compositions that exhibit rapid curing properties.

Further improvements in terms of rapid curing properties are required of matrix resins for fiber-reinforced composite materials in order to ensure excellent low viscosity properties and higher productivity without compromising heat resistance.

### [Citation List]

### [Patent Literature]

[PTL 1] JP 2016-098322 A
[PTL 2] JP 2015-535022 A
[PTL 3] JP 2015-536373 A
[PTL 4] WO 2017/179358 A
[PTL 5] JP 2013-32510 A
[PTL 6] JP 2008-530321 A
[PTL 7] JP H11-158350 A
[PTL 8] JP H03-2258 A

### [Summary of Invention]

The purpose of the present invention is to provide a resin composition for a fiber-reinforced composite material, which exhibits excellent rapid curing properties without compromising heat resistance and low viscosity properties. Furthermore, the purpose of the present invention is also to provide a resin composition capable of obtaining a fiber-reinforced composite material (a fiber-reinforced molded body) with good productivity; and a method for producing a prepreg and fiber-reinforced molded body using the resin composition.

As a result of research carried out in order to solve the problems mentioned above, the inventors of the present invention found that the problems mentioned above could be solved by using a main agent, which includes a specific epoxy resin and a specific ester compound, and a curing agent which includes a specific amine compound, and thereby completed the present invention.

That is, the present invention is a two-pack curable resin composition for a fiber-reinforced composite material, the resin composition including a main agent that includes an epoxy resin (A) and an ester compound (B) represented by general formula (1) below, and a curing agent that includes an amine compound (C).
[C1] 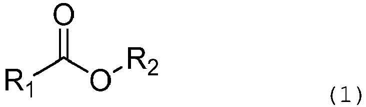 (In the formula, R₁ and R₂ each denote an alkyl group having 1 to 40 carbon atoms or an aryl group having 6 to 40 carbon atoms, and R₁ and R₂ may bond together to form a cyclic structure. In addition, R₁ may be a group represented by R₂₃OCO-, where R₂₃ is defined in the same way as R₁ and R₂.)
   Examples of the ester compound (B) include ester compounds represented by any of general formulae (2) to (4) below.
[C2] 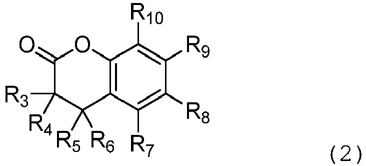 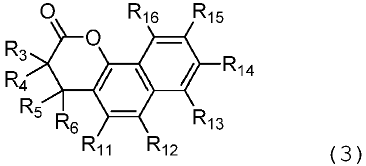 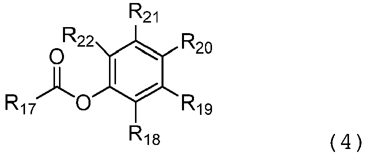 (In the formulae, R₃ to R₂₂ each denote a hydrogen atom, a hydroxyl group, a straight chain or branched alkyl group having 1 to 20 carbon atoms, an aryl group having 6 to 20 carbon atoms, a heteroaryl group having 3 to 20 carbon atoms or a group represented by R₂₃OCO-, and in the case where any one of R₃ to R₂₂ is an aryl group, a heteroaryl group or a R₂₃OCO- group, the one may be bonded to an aromatic skeleton or a 6-membered lactone skeleton (a bonded carbon atom in the case of R₁₇) either directly or via a crosslinking group.)
   Examples of the amine compound (C) mentioned above include amine compounds represented by general formula (5) below. Amine compounds represented by formulae (6) to (8) below are preferred.

   X-(CH₂NH₂)ₙ (5)

   (In the formula, X denotes an n-valent organic group having 1 to 16 carbon atoms, and n is 2 or 3.)
[C3]

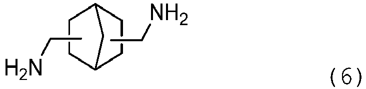

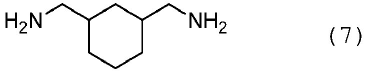

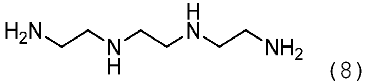

Preferred embodiments are embodiments which satisfy one or more of the following conditions: the mass ratio of the main agent and the curing agent falls within the range 90:10 to 70:30; the ester compound (B) is contained in the main agent at a quantity of 2 wt% to 30 wt%; and a cured product of the resin composition for a fiber-reinforced composite material has a glass transition temperature of 100°C or higher.

In addition, the present invention is also a prepreg including reinforcing fibers in the resin composition for a fiber-reinforced composite material mentioned above. In this prepreg, the content by volume of the reinforcing fibers should be 45% to 70%.

Furthermore, the present invention is also a cured product of the prepreg mentioned above.

In addition, the present invention is also a method for producing a molded body, the method including molding the prepreg mentioned above using a resin transfer molding method or a liquid compression molding method.

In addition, the present invention is also a method for producing a molded body, the method including the steps of preparing the two-pack curable resin composition for a fiber-reinforced composite material mentioned above; mixing reinforcing fibers with the two liquids of this resin composition for a fiber-reinforced composite material so as to form a prepreg; and then thermally curing and molding this prepreg in a mold.

The resin composition for a fiber-reinforced composite material of the present invention has a low viscosity, impregnates well into reinforcing fibers, and exhibits curing properties in a short time. As a result, the resin composition for a fiber-reinforced composite material of the present invention is suitable for use as a resin composition for a fiber-reinforced composite material, which is used in order to form a molded body from a prepreg using a resin transfer molding method or a liquid compression molding method. Furthermore, a molded product obtained by curing the resin composition exhibits excellent demolding properties from a mold and has a high glass transition temperature.

### [Description of Embodiments]

Embodiments of the present invention will now be explained in detail.

The resin composition for a fiber-reinforced composite material of the present invention forms a prepreg by being blended with reinforcing fibers, and a cured product or molded body is formed by curing or molding this prepreg.

Hereinafter, a resin composition for a fiber-reinforced composite material is also referred to as a resin composition, and a fiber-reinforced composite material is also referred to as a composite material, a molded body or a cured product.

The resin composition of the present invention is a two-pack curable resin composition constituted from a main agent, which includes an epoxy resin (A) and an ester compound (B) represented by general formula (1) above, and a curing agent that includes an amine compound (C). Here, the epoxy resin (A), the ester compound (B) and the amine compound (C) are also referred to as component (A), component (B) and component (C) respectively, or as the epoxy resin, the ester compound and the amine compound respectively.

The epoxy resin (A) that is used as a main agent component is preferably a difunctional or higher epoxy resin. Specifically, bisphenol type epoxy resins such as bisphenol AS type epoxy resins, bisphenol F type epoxy resins, bisphenol E type epoxy resins, bisphenol S type epoxy resins, bisphenol Z type epoxy resins and isophorone bisphenol type epoxy resins; halogen-substituted products, alkyl-substituted products and hydrogenated products of these bisphenol type epoxy resins; high molecular weight species having a plurality of repeating units in addition to monomers; glycidyl ethers of alkylene oxide adducts,; novolac type epoxy resins such as phenol novolac type epoxy resins, cresol novolac type epoxy resins and bisphenol A novolac type epoxy resins; alicyclic epoxy resins such as 3,4-epoxy-6-methylcyclohexylmethyl-3,4-epoxy-6-methylcyclohexane carboxylate, 3,4-epoxycyclohexylmethyl-3,4-epoxycyclohexane carboxylate and 1-epoxyethyl-3,4-epoxycyclohexane; aliphatic epoxy resins such as trimethylolpropane polyglycidyl ether, pentaerythritol polyglycidyl ether and polyoxyalkylene diglycidyl ethers; diglycidyl esters such as fumaric acid diglycidyl ester, tetrahydrophthalic acid diglycidyl ester and dimer acid diglycidyl esters; glycidylamine compounds such as tetraglycidyldiaminodiphenylmethane, tetraglycidyldiaminodiphenylsulfone, triglycidylaminophenol, triglycidylaminocresol andtetraglycidylxylylenediamine, and the like, can be used. It is possible to use one of these in isolation or a combination of two or more types thereof.

The viscosity at 25°C of the epoxy resin is preferably 30,000 mPa·s or less from the perspective of fluidity. Moreover, in the present description, viscosity measurements are carried out using an E type viscometer unless explicitly indicated otherwise.

The ester compound (B) that is used as a main agent component is represented by general formula (1) above. Because these react with the amine compound due to having an ester structure, a hydroxyl group is generated and rapid curing properties are improved.

In general formula (1), R₁ and R₂ each denote an alkyl group having 1 to 40 carbon atoms or an aryl group having 6 to 40 carbon atoms, but are preferably alkyl groups having 1 to 10 carbon atoms or aryl groups having 6 to 20 carbon atoms. From the perspective of generating a phenolic hydroxyl group, R₂ is preferably an aryl group. In addition, R₁ and R₂ may bond to each other to form a cyclic structure, and the alkyl groups and aryl groups mentioned above may have substituent groups. Preferred substituent groups are hydroxyl groups, carboxyl groups, thiol groups, ester groups (OCO), and the like. In addition, R₁ can be an ester-containing group (R₂₃OCO-) . Here, R₂₃ is defined in the same way as R₁ and R₂, and bonds to an oxygen atom or a carbon atom in the ester group. In addition, R₁ and R₂ may have substituent groups. These substituent groups can be understood from explanations of general formulae (2) to (4).

Among these compounds, ester compounds represented by general formulae (2) to (4) above are particularly preferred from the perspective of reacting with the amine compound, thereby generating a phenolic hydroxyl group and further improving rapid curing properties.

In general formulae (2) to (4), R₃ to R₂₂ each denote a hydrogen atom, a hydroxyl group, a straight chain or branched alkyl group having 1 to 20 carbon atoms, an aryl group having 6 to 20 carbon atoms, a heteroaryl group having 3 to 20 carbon atoms or a group represented by R₂₃OCO-, and in the case of an aryl group, a heteroaryl group or a R₂₃OCO- group, these may be bonded to an aromatic skeleton or a 6-membered lactone skeleton either directly or via a crosslinking group. Here, R₁₇ is not bonded to a ring-forming carbon atom, and may therefore bond to a bonded carbon atom either directly or via a crosslinking group. R₂₃ is defined in the same way as the alkyl groups and aryl groups mentioned above. Preferred crosslinking groups are alkylene groups having 1 to 3 carbon atoms, and the like.

In the case of the alkyl groups, aryl groups and heteroaryl groups mentioned above (including cases where R₂₃ is an alkyl group or an aryl group), these may have substituent groups, and preferred substituent groups are hydroxyl groups, carboxyl groups, thiol groups, ester groups (OCO), and the like.

Examples of specific structural formulae of compounds represented by general formulae (1) and general formulae (2) to (4) will now be given. It is possible to use one of these compounds in isolation or, if necessary, a combination of two or more types thereof.

[C4]

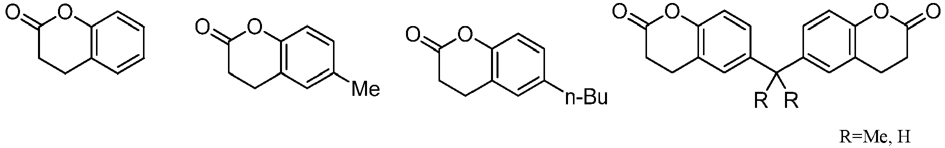

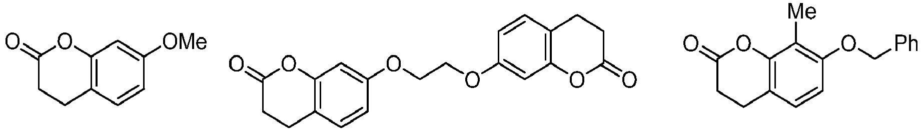

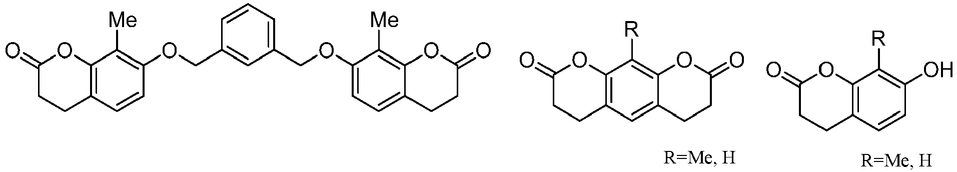

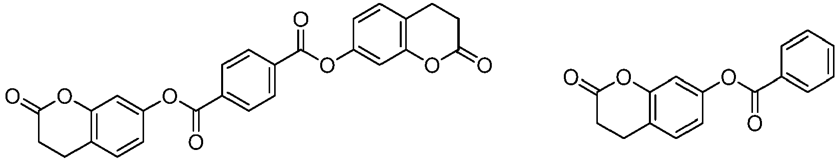

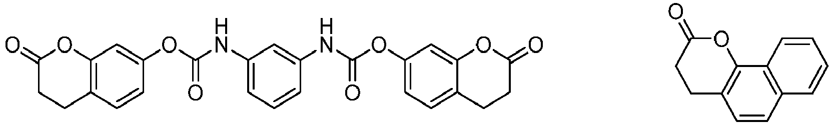

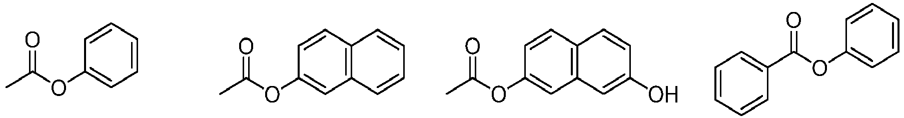

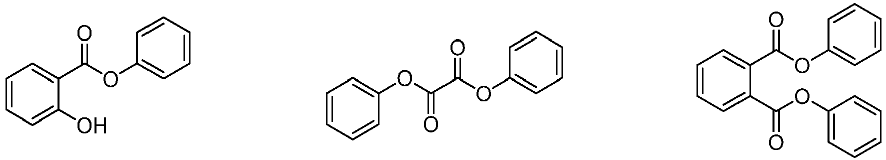

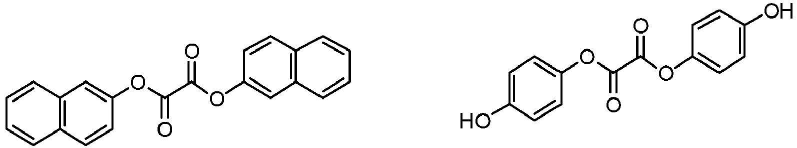

The amine compound (C) used as a curing agent component is a compound having an amino group, but is preferably a compound represented by general formula (5) above. The amine compound represented by general formula (5) has 2 or 3 aminomethyl groups per molecule. Aminomethyl groups exhibit high reactivity with epoxy groups and acryloyl groups, and exhibit excellent rapid curing properties. In addition, by having two or more aminomethyl groups per molecule, it is possible to obtain a molded product that exhibits high crosslinking density at the time of thermal curing and exhibits excellent heat resistance.

Specific examples of the amine compound (C) include iminobis(propylamine) and triethylenetetramine, which have a secondary amine represented by formula (9) in the molecular structure; acyclic aliphatic polyamines such as bis(hexamethylene)triamine; cyclic aliphatic polyamines such as bis(aminomethyl)cyclohexane, 1,3,6-tris(aminomethyl)cyclohexane, 3,9-bis(3-aminopropyl)-2,4,8,10-tetraoxaspiro(5.5)undecane and bis(aminomethyl)norbornane; aromatic ring-containing polyamines such as meta-xylylenediamine (MXDA); and derivatives in which alicyclic rings and aromatic rings in these compounds are substituted with alkyl groups.
[C5]

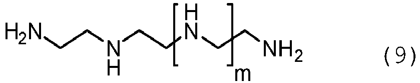

Of these, norbornane diamine represented by formula (6) above, 1,3-bis(aminomethyl)cyclohexane represented by formula (7) above and triethylenetetramine represented by formula (8) above are particularly preferred. Rapid curing properties are improved by using these amine compounds. It is possible to use one of these compounds in isolation or a mixture thereof.

The resin composition of the present invention is a two-pack curable composition comprising a main agent and a curing agent, and can be thermally cured by mixing these agents at prescribed proportions. The mixing ratio of the main agent and the curing agent is determined according to the type of epoxy resin component in the main agent and the type of curing agent component in the curing agent. Specifically, this mixing ratio is adjusted by calculating the ratio of the number of moles of epoxy groups contained in all the epoxy resin components and the number of moles of active hydrogen contained in the curing agent component, and this mass ratio falls within the range 90:10 to 70:30. If the mixing ratio falls within this range, an obtained resin cured product exhibits excellent heat resistance and elastic modulus.

In the main agent, the ester compound (B) is preferably contained at a content of 2 mass% to 30 mass%. If this content is too low, rapid curing properties cannot be adequately exhibited. Meanwhile, if this content is too high, heat resistance decreases.

The resin composition of the present invention is a two-pack curable composition comprising a main agent and a curing agent, and the curing agent that contains the amine compound may, if necessary, contain other curing agent components, curing accelerators and curing catalysts.

In addition, components such as plasticizers, dyes, organic pigments, inorganic fillers, polymer compounds, coupling agents, surfactants and solvents can be blended as such other components, as appropriate, in the main agent and the curing agent. In addition, other curable resins can also be blended. Examples of such curable resins include, but are not limited to, unsaturated polyester resins, curable acrylic resins, curable amino resins, curable melamine resins, curable urea resins, curable cyanate ester resins, curable urethane resins, curable oxetane resins and curable epoxy/oxetane composite resins.

Any of these can be blended in view of reactivity with components contained in the main agent and the curing agent, viscosity, and the like. Formulations in which components contained in the main agent or the curing agent react with each other are avoided. In addition, solvents lower the productivity of a molded body, and are therefore preferably not contained or contained at a low quantity.

Examples of these other curing agent components, curing accelerators and curing catalysts include tertiary amines, carboxylic acids, sulfonic acids, Lewis acid complexes, onium salts, imidazole, alcohols, and compounds having one phenolic hydroxyl group, such as phenol, cresol, allylphenol, nitrophenol, para-aminophenol, meta-aminophenol, mono-t-butylphenol and di-t-butylphenol. It is possible to use one of these components, or a combination of two or more types thereof.

The resin composition of the present invention, when in the form of a cured product, preferably has a glass transition temperature (Tg) of 100°C or higher. In cases where the Tg value is lower than 100°C, deformation readily occurs when a cured product or molded body of an obtained fiber-reinforced composite material is removed from a mold.

Reinforcing fibers used in the fiber-reinforced composite material of the present invention are selected from among glass fibers, aramid fibers, carbon fibers, boron fibers, and the like, but it is preferable to use carbon fibers in order to obtain a fiber-reinforced composite material having excellent strength.

The prepreg of the present invention includes the resin composition and reinforcing fibers mentioned above. The content by volume of the reinforcing fibers in the prepreg is preferably 45% to 70%, and more preferably 48% to 62%. By setting this content to fall within this range, it is possible to obtain a molded body having few voids and a high content by volume of reinforcing fibers, and it is therefore possible to obtain a molding material having excellent strength.

The prepreg can be advantageously cured by pouring the main agent at a temperature within the range 50°C to 90°C and the curing agent at a temperature within the range 20°C to 60°C into a mold or the like in which fibers have been placed in advance, and then thermally curing at a temperature of 90°C to 160°C, and preferably 100°C to 140°C, for period of 15 to 360 seconds, and preferably 25 to 150 seconds. The main agent and the curing agent may be poured into the mold at the same time, but in order to increase homogeneity, it is preferable to mix these agents immediately before pouring the agents into the mold. However, it is also possible to the pour the agents into the mold without mixing and then mix the agents in the presence of the fibers. Mixing methods are not limited to collisional mixing, static mixing methods, and the like, but it is preferable to use a collisional mixing method, in which uniform mixing is completed in a short time.

If the pouring temperature is low, fluidity decreases and filling defects into the molding mold and fibers occur, which is not desirable. In addition, if the pouring temperature is high, burrs occur, curing starts when the resin is poured into the mold, the resin is cured in the tank and in the molding mold, and filling defects occur, which are not desirable. In addition, if the molding time is too short, insufficient filling occurs, and if the molding time is too long, the resin is cured in the mold, molding defects occur, and productivity decreases, which are not desirable. The resin composition contained in the prepreg of the present invention can be poured into a molding mold or impregnated at a relatively low pouring temperature such as that mentioned above, and it is possible to obtain a cured product that can be released from the mold after a short curing time.

The method for producing a prepreg or a fiber-reinforced composite material (a molded body or a cured product) from the resin composition of the present invention is not particularly limited, but an RTM method or an LCM method is preferred. An RTM method is a method in which a molded body is obtained by disposing a fiber substrate or preform comprising reinforcing fibers in a molding mold, pouring the liquid resin composition for a fiber-reinforced composite material into the molding mold so as to impregnate the reinforcing fibers and obtain a prepreg, and then heating so as to cure the prepreg. Curing conditions are preferably conditions explained above in relation to curing the prepreg. An LCM method is a method in which a molded body is obtained by disposing a fiber substrate or preform comprising reinforcing fibers, which have been contacted with a resin in advance, in a molding mold in a state whereby a molding pressure is released, clamping the molding mold shut so as to simultaneously effect impregnation and molding and obtain a pre-molded body, and then heating the mold so as to cure the pre-molded body. Curing conditions for the LCM method are also preferably conditions explained above in relation to curing the prepreg.

### [Examples]

The present invention will now be explained in greater detail through the use of examples, but the present invention is not limited to the examples given below as long as the gist of the present invention is not exceeded. Numbers of parts that denote blending quantities are parts by mass unless explicitly indicated otherwise.

Abbreviations of components used in the examples and comparative examples are as shown below.

### Component (A)

YD-128: Bisphenol A type epoxy resin (produced by Nippon Steel & Sumikin Chemical Co., Ltd.)
YDF-170: Bisphenol F type epoxy resin (produced by Nippon Steel & Sumikin Chemical Co., Ltd.)

### Component (B)

DHCM: Dihydrocoumarin
SAPE: Phenyl salicylate
Component (C)
NBDA: Bis(aminomethyl)norbornane
1,3-BAC: 1,3-bis(aminomethyl)cyclohexane
TETA: Triethylenetetramine
Component (D) (other components)
4tBP: 4-tert-butylphenol
2E4MZ: 2-ethyl-4-methylimidazole
DICY: Dicyandiamide

Methods for measuring and testing physical properties are as follows.

### (Measurement of viscosity of main agent)

Viscosity was measured at 25°C using a cone-plate type E-type viscometer (RE80H produced by Toki Sangyo Co., Ltd.). The viscosity was taken to be the value after 60 seconds had passed since the start of the measurement.

### (Measurement of gelling time)

A two-pack curable resin composition was added to a plate of a gelling tester (produced by Nisshin Kagaku Kenkyusho Co., Ltd.) that had been heated to 120°C, and then stirred at a rate of 2 revolutions per second using a fluororesin rod, and as curing of the resin composition progressed, the time required for plasticity to be lost was taken to be the gelling time. Cases where gelling did not occur were evaluated as ×.

### (Measurement of glass transition temperature Tg)

Measurements were carried out using a dynamic viscoelasticity tester under conditions such that a glass transition temperature measurement sample was heated at a temperature increase rate of 5°C/min, the mode used was a bending mode and the measurement frequency was 10 Hz, and the maximum value of the loss elastic modulus (E'') was taken to be the Tg value.

### Example 1

95 parts of YD-128 was used as component (A), 5 parts of DHCM was used as component (B), and 20.9 parts of NBDA was used as component (C).

Component (A) and component (B) were mixed to obtain a main agent. Component (C) and component (D) were mixed to obtain a curing agent.

A resin composition was obtained by mixing the main agent and the curing agent using a vacuum mixer while stirring for five minutes at room temperature.

This resin composition was poured into a mold, which had been heated to 120°C, had a length of 60 mm and a width of 80 mm, was provided with a 4 mm thick spacer, and had been hollowed out in a planar shape, the resin composition was cured for five minutes, the obtained cured product was cut to a size of 50 mm × 10 mm using a table-top band saw so as to obtain a test piece, and this test piece was used for Tg measurements.

### Examples 2 to 7 and Comparative Examples 1 to 8

Resin compositions and test pieces were produced under mixing conditions similar to those used in Example 1, except that raw materials used as components (A) to (D) were used at compositional quantities (parts) shown in Table 1 and Table 2.

Formulations and test results for Examples 1 to 7 are shown in Table 1, and formulations and test results for Comparative Examples 1 to 8 are shown in Table 2. Blending quantities are parts by mass.

**[Table 1]**

| Example | 1 | 2 | 3 | 4 | 5 | 6 | 7 |
|---|---|---|---|---|---|---|---|
| YD-128 | 95 | 90 | 70 | 90 | 90 | 90 | 90 |
| YDF-170 | | | 20 | | | | |
| DHCM | 5 | 10 | 10 | | 10 | 10 | 10 |
| SAPE | | | | 10 | | | |
| NBDA | 20.9 | 21.1 | 21.6 | 20.3 | | | 21.1 |
| 1,3-BAC | | | | | 19.5 | | |
| TETA | | | | | | 13.4 | |
| 4tBP | | | | | | | 2.35 |
| Physical property evaluations Main agent viscosity (mPa/s) | 7125 | 4213 | 1433 | 6520 | 4213 | 4213 | 4213 |
| Gelling time (sec) | 56 | 47 | 47 | 48 | 55 | 43 | 40 |
| Tg (°C) | 126 | 113 | 105 | 114 | 109 | 103 | 108 |

**[Table 2]**

| Comparative Example | 1 | 2 | 3 | 4 | 5 | 6 | 7 | 8 |
|---|---|---|---|---|---|---|---|---|
| YD-128 | 100 | 100 | 100 | 100 | 99 | 60 | 87 | 98 |
| DHCM | | | | | 1 | 40 | 13 | 2 |
| NBDA | 20.6 | | | 20.6 | 20.7 | 22.8 | | |
| 1,3-BAC | | 19.0 | | | | | | |
| TETA | | | 13.3 | | | | | |
| 2E4MZ | | | | | | | 3.3 | 0.3 |
| DICY | | | | | | | | 5.0 |
| 4tBP | | | | 2.29 | | | | |
| Physical property evaluations Main agent viscosity (mPa/s) | 12000 | 12000 | 12000 | 12000 | 10120 | 259 | 3275 | 9210 |
| Gelling time (sec) | 96 | 113 | 67 | 87 | 90 | 44 | 303 | × |
| Tg (°C) | 149 | 139 | 130 | 133 | 140 | 72 | 120 | 111 |

## Claims

1. A two-pack curable resin composition for a fiber-reinforced composite material, the composition comprising a main agent that includes an epoxy resin (A) and an ester compound (B) represented by general formula (1) below, and a curing agent that includes an amine compound (C): 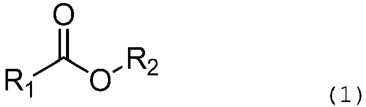 in the formula, R₁ and R₂ each denote an alkyl group having 1 to 40 carbon atoms or an aryl group having 6 to 40 carbon atoms, and R₁ and R₂ may bond together to form a cyclic structure and may have substituent groups; or R₁ may be a group represented by R₂₃OCO-, where R₂₃ is same as defined for R₂.

2. The resin composition for a fiber-reinforced composite material according to claim 1, wherein the ester compound (B) is represented by any one of general formulae (2) to (4) below: 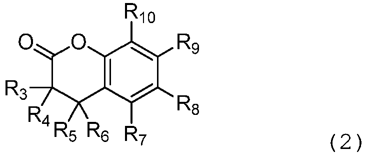 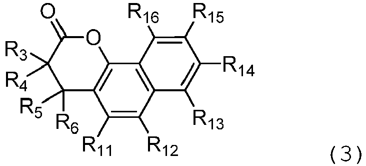 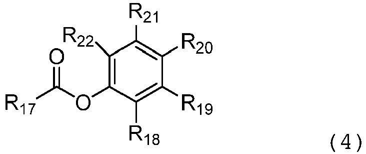 in the formulae, R₃ to R₂₂ each denote a hydrogen atom, a hydroxyl group, a straight chain or branched alkyl group having 1 to 20 carbon atoms, an aryl group having 6 to 20 carbon atoms, a heteroaryl group having 3 to 20 carbon atoms or a group represented by R₂₃OCO-, and in the case where any one of R₃ to R₂₂ is an aryl group, a heteroaryl group or a R₂₃OCO- group, the one may be bonded to a bonded carbon atom either directly or via a crosslinking group.

3. The resin composition for a fiber-reinforced composite material according to claim 1, wherein the amine compound (C) is represented by general formula (5) below:
X-(CH₂NH₂)ₙ (5)
(in the formula, X denotes an n-valent organic group having 1 to 16 carbon atoms, and n is 2 or 3).

4. The resin composition for a fiber-reinforced composite material according to claim 3, wherein the amine compound (C) is represented by any one of general formulae (6) to (8) below:

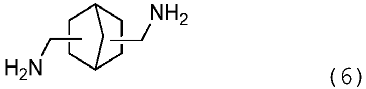

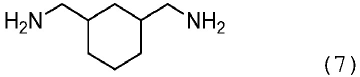

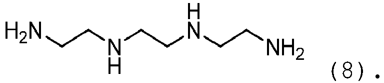

5. The resin composition for a fiber-reinforced composite material according to claim 1, wherein a mass ratio of main agent:curing agent is 90:10 to 70:30.

6. The resin composition for a fiber-reinforced composite material according to claim 1, wherein the ester compound (B) is contained at a quantity of 2 wt% to 30 wt% in the main agent.

7. The resin composition for a fiber-reinforced composite material according to claim 1, wherein a glass transition temperature of a cured product of the resin composition for a fiber-reinforced composite material is 100°C or higher.

8. A prepreg comprising reinforcing fibers in the resin composition for a fiber-reinforced composite material according to any one of claims 1 to 7.

9. The prepreg according to claim 8, wherein the content by volume of the reinforcing fibers is 45% to 70%.

10. A cured product of the prepreg according to claim 8.

11. A method for producing a molded body, the method comprising molding the prepreg according to claim 8 using a resin transfer molding method or a liquid compression molding method.

12. A method for producing a molded body, the method comprising the steps of preparing the two-pack curable resin composition for a fiber-reinforced composite material according to claim 1; mixing reinforcing fibers with the two liquids of this resin composition for a fiber-reinforced composite material so as to form a prepreg; and then thermally curing and molding this prepreg in a mold.
